# EUROPÄISCHE PATENTSCHRIFT

(11) **EP 0 455 062 B1**
(45) Veröffentlichungstag und Bekanntmachung des Hinweises auf die Patenterteilung: **26.07.1995**
(21) Anmeldenummer: 91106258.6
(22) Anmeldetag: 18.04.1991
(51) Int. Cl.: H02M 3/158, H02M 3/337

(54) **Stromgespeister Gegentaktwandler**
Current-fed push-pull converter
Convertisseur push-pull alimenté en courant

(30) Priorität: 25.04.1990 DE 4013213
(43) Veröffentlichungstag der Anmeldung: 06.11.1991
(73) Patentinhaber: Siemens Nixdorf Informationssysteme Aktiengesellschaft, 33102 Paderborn (DE)
(72) Erfinder: Rettenmaier, Helmut, Dipl.-Ing. (FH), W-8934 Grossaitingen (DE); Busch, Peter, Dipl.-Ing. (FH), W-8900 Augsburg (DE)
(74) Vertreter: Fuchs, Franz-Josef, Dr.-Ing.

(56) Entgegenhaltungen:
- CH-A- 589 965
- US-A- 3 898 549
- PESC '86 record 1986, Seiten 684 - 695; Capel et al: "A bi-directional highpower cell using large signal feedback control withmaximum current conduction control (MC3) for space applic"
- ELECTRONIQUE ET APPLICATIONS INDUSTRIELLES. no. 262S, 15 Januar 1979, PARIS FR Seiten 7-8; Gibert: "Convertisseur generant deux tensions symetriques"
- ELEKTRONIK. no. 4, 1978, MUNCHEN DE Seiten 102 - 107; J. Wüstehube:"Gleichspannungswandler für Schaltnetzteile"

## Beschreibung

Die Erfindung betrifft einen stromgespeisten Gegentaktwandler gemäß den Merkmalen des Oberbegriffs des Anspruchs 1

Zur Erzeugung mehrerer stabiler Ausgangsgleichspannungen aus einer vorgegebenen Eingangsgleichspannung, die beispielsweise in einem Netzgerät erzeugt wird und netzgetrennt und unterbrechungsfrei ist, können mehrere einzelne, parallel geschaltete Abwärts-Spannungsregler vorgesehen sein, die jeweils eine Ausgangsgleichspannung erzeugen. Da jeder Abwärts-Spannungsregler eine abgeschlossene Einheit bildet und entsprechend viele solcher Einheiten verwendet sind, ist der allgemeine, aber auch der magnetische Bauteileaufwand sehr hoch. Eine Möglichkeit zur Reduzierung des allgemeinen Bauteileaufwands ist die Verwendung eines Zwei-Transistor-Eintaktdurchflußwandlers mit mehreren Ausgangswicklungen, denen jeweils eine Speicherdrossel zugeordnet ist. Der große Aufwand an magnetischen Bauteilen ist dadurch aber noch nicht behoben. Ferner ist eine ungünstige Beeinflussung der Ausgangsgleichspannungen untereinander bei Lastschwankungen von an einzelnen Ausgängen angeschlossenen Lasten gegeben. Die Voraussetzungen für einen guten Gleichlauf der Ausgangsgleichspannungen werden durch die Verwendung eines stromgespeisten Gegentaktdurchflußwandlers mit mehreren Ausgangswicklungen geschaffen. Der Aufwand an magnetischen Bauteilen ist aber immer noch relativ hoch. Zwar reduziert sich innerhalb der Anordnung die Anzahl der sekundärseitig verwendeten Speicherdrosseln auf eine einzige primärseitig verwendete Speicherdrossel, doch ist der Aufwand an magnetischen Bauteilen deshalb noch relativ hoch, weil nachwievor als Übertragereinheit ein Volltransformator verwendet wird, der insbesondere dann, wenn hohe Leistungen übertragen werden sollen, relativ große Ausmaße annimmt. Abwärts-Spannungsregler sind an sich bekannt. Bekannt sind insbesondere spezielle Ausgestaltungen von Abwärts-Spannungsreglern, z.B. die Ausgestaltungen als Zwei-Transistor-Eintaktdurchflußwandler oder als stromgespeister Gegentaktwandler. Entsprechende Grundschaltungen sind beispielsweise in Elektronik 1978, Heft 4, Seiten 102 - 107, insbesondere Bilder 4, 9 und 13, angegeben.

Aus dem Konferenzbericht PESC '86, Seiten 684 bis 695 ist eine Schaltungsanordnung bekannt, die entsprechend einem stromgespeisten Gegentaktwandler aufgebaut ist. Die Schaltungsanordnung weist eine Übertragereinrichtung auf, die durch einen Spartransformator gebildet ist. Ein Mittelabgriff des Spartransformators ist mit einem ein Spannungspotential führenden Ausgang einer vorgeschalteten Abwärts-Regeleinrichtung verbunden. Aufgrund dieser Beschaltung erfolgt im Spartransformator keine Stromaufteilung und es ist nicht möglich, durch Anzapfungen des Spartransformators beliebige Kombinationen von Ausgangsspannungen gegebenenfalls auch mit negativem Vorzeichen zu erzeugen. Bei der vorgestellten Schaltungsanordnung handelt es sich um eine Abwärts-Regeleinrichtung mit nachgeschalteter Spannungsverdopplung. Damit kann lediglich ausgehend von der Höhe beispielsweise einer Batteriespannung innerhalb eines ausschließlich positiven Spannungsbereichs nur eine Spannungserhöhung oder eine Spannungsreduzierung durchgeführt werden. Es ist aber beispielsweise nicht möglich, gleichzeitig eine +12V-Spannung und eine +5V-Spannung am Spartransformator abzugreifen. Beträgt die höchste Ausgangsspannung am Spartransformator nämlich +12V, liegt am Mittelabgriff des Spartransformators bereits eine Spannung von +6V an und es kann durch einfache Anzapfung keine +5V-Spannung mehr erzeugt werden.

Aus der CH-589 965 ist eine Schaltungsanordnung bekannt, bei der ein Wandler in Reihe zu der ihn versorgenden Gleichspannungsquelle geschaltet ist. Es handelt sich hier aber um keine stromgespeiste Gegentaktschaltung.

Aus der US-3 898 549 ist zwar ein Gegentaktdurchflußwandler mit Spartransformator bekannt. Es handelt sich hier aber ebenfalls um keinen stromgespeisten Gegentaktdurchflußwandler.

Aufgabe der Erfindung ist es, aus einer vorgegebenen Eingangsgleichspannung mehrere stabile Ausgangsgleichspannungen mit einem möglichst geringen Aufwand an Bauteilen, insbesondere an magnetischen Bauteilen, zu erzeugen, so daß das Verhältnis Aufwand zu Nutzen verbessert wird.

Diese Aufgabe wird ausgehend von einem stromgespeisten Gegentaktwandler der eingangs genannten Art durch die im kennzeichnenden Teil des Anspruchs 1 angegebenen Merkmale gelöst. Der Aufwand für magnetische Bauteile wird so minimal, weil die Übertragereinheit auf eine eigenständige Primärwicklung verzichtet. Die Abmessungen der Übertragereinheit verkleinern sich oder die übertragbare Leistung erhöht sich. In jedem Fall wird das Verhältnis von Aufwand zu Nutzen verbessert. Hierzu trägt auch der mit dem Massebezugspunkt verbundene Mittelabgriff bei, weil dadurch der Spartransformator sowohl in die eine als auch in die andere Magnetisierungsrichtung genutzt werden kann.

Vorteilhafte Ausgestaltungen der Erfindung sind Gegenstand von Unteransprüchen. Danach können bei der Erzeugung von Ausgangsgleichspannungen Bauteile eingespart werden, wenn wenigstens eine Gleichspannungs-Abgriffsschaltung vor den Gegentaktschaltern angeordnet wird. Die Sekundärwicklungen zur Erzeugung der einzelnen Ausgangsgleichspannungen werden maximal ausgenützt, wenn an die Sekundärwicklungen parallel jeweils zwei Gleichspannungs-Abgriffsschaltungen angeschlossen werden, von denen jeweils die eine Gleichspannungs-Abgriffsschaltung eine positive und die andere eine negative Ausgangsgleichspannung erzeugt. Sind die Gleichspannungs-Abgriffsschaltungen nach den Gegentaktschaltern angeordnet, besteht ein bestmöglicher Gleichlauf zwischen den einzelnen Ausgangsgleichspannungen.

Nachfolgend wird ein Ausführungsbeispiel der Erfindung anhand der Zeichnung näher erläutert. Dabei zeigt:
- FIG 1: einen stromgespeisten Gegentaktwandler gemäß der Erfindung,
- FIG 2: eine erste Schaltungsvariante des stromgespeisten Gegentaktwandlers nach FIG 1 und
- FIG 3: eine zweite Schaltungsvariante des stromgespeisten Gegentaktwandlers nach FIG 1.

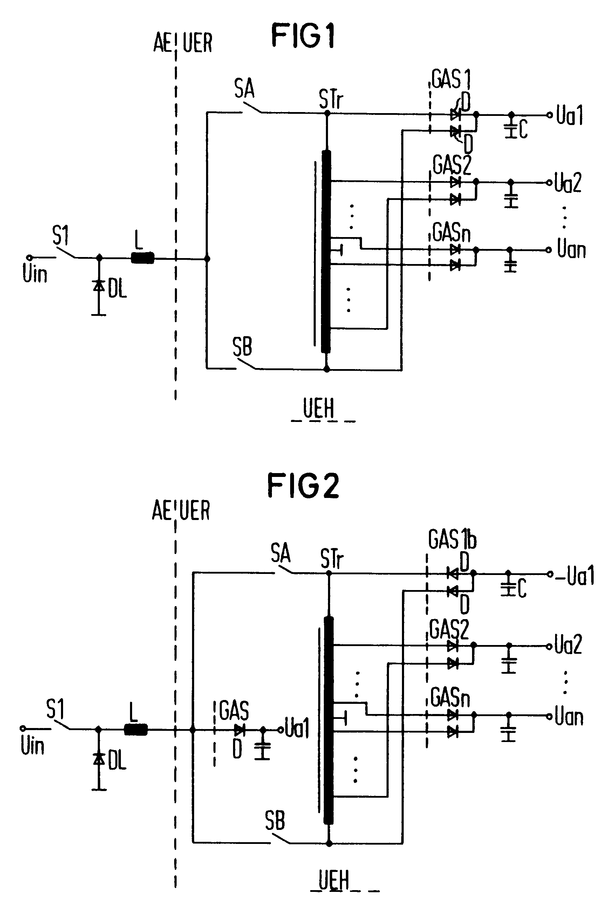

Der in FIG 1 dargestellte stromgespeiste Gegentaktwandler besteht aus einer Abwärts-Regeleinrichtung AE und einer Übertragereinrichtung UER, die der Abwärts-Regeleinrichtung AE nachgeschaltet ist. Bei der Abwärts-Regeleinrichtung AE handelt es sich um einen Speicherdrosselwandler, der einen Regelschalter S1, eine Drosselentmagnetisierungsdiode DL und eine Speicherdrossel L aufweist. Der Regelschalter S1 ist eingangsseitig an eine Eingangsgleichspannung Uin angeschlossen, bei der es sich beispielsweise um eine batteriegepufferte Zwischenkreisspannung eines Netzgeräts handelt. Die Eingangsgleichspannung Uin ist in diesem Fall netzgetrennt und ausfallgesichert, so daß hierfür keine zusätzlichen Maßnahmen mehr notwendig sind. Der Regelschalter S1 ist die einzige regelnde Komponente. Durch ihn, die Speicherdrossel L und die Drosselentmagnetisierungsdiode DL wird aus der Eingangsgleichspannung Uin eine geregelte Spannung erzeugt, die nachfolgend mit Zwischenausgangsspannung bezeichnet wird. Hierzu ist der Regelschalter S1 ausgangsseitig sowohl mit einem Anschluß der Speicherdrossel L als auch mit der Kathode der Drosselentmagnetisierungsdiode DL verbunden. Die Anode der Drosselentmagnetisierungsdiode DL ist auf ein Massepotential geführt, das gleichzeitig der Bezugspunkt für die gesamte Schaltungsanordnung ist. Der zweite Anschluß der Speicherdrossel L bildet den Ausgang der Abwärts-Regeleinrichtung AE, an der die Zwischenausgangsspannung anliegt. Da die Übertragereinrichtung UER der Abwärts-Regeleinrichtung AE nachgeschaltet ist, ist die Zwischenausangsspannung gleichzeitig die Eingangsspannung der Übertragereinrichtung UER.

Die Übertragereinrichtung UER weist zwei im Gegentakt betriebene Schalter SA und SB, nachfolgend Gegentaktschalter genannt, eine Übertragereinheit UEH und wenigstens eine Gleichspannungs-Abgriffsschaltung GAS auf. Die Gegentaktschalter SA und SB sind jeweils eingangsseitig zusammengeschaltet. Der Zusammenschaltungspunkt bildet gleichzeitig den Eingang der Übertragereinrichtung UER. An diesem Punkt liegt die Zwischenausgangsspannung der Abwärts-Regeleinrichtung AE als Eingangsspannung an. Die Gegentaktschalter SA und SB der Übertragereinrichtung UER sind so gesteuert, daß sie jeweils abwechselnd geschlossen werden. Das Tastverhältnis ist fest eingestellt und beträgt jeweils 50 % einer Taktperiode.

Die Gegentaktschalter SA und SB sind ausgangsseitig jeweils mit der Übertragereinheit UEH verbunden. Dabei ist die Übertragereinheit UEH durch einen Spartransformator STr gebildet, der im Gegensatz zu einem Volltransformator nur eine Wicklung aufweist, die mit Anzapfungen zum Abgriff von Sekundärspannungen versehen ist. Die Gesamtwicklung bildet die Primärwicklung, während Sekundärwicklungen durch Teilwicklungen zwischen einer Anzapfung und einem Bezugspunkt realisiert sind.

Im Ausführungsbeispiel wird der Bezugspunkt durch eine Mittelanzapfung der Gesamtwicklung gebildet. Gegenüber der Mittelanzapfung ist die Gesamtwicklung zu beiden Wicklungsenden hin symmetrisch gewickelt, so daß jede Anzapfung für eine Ausgangsgleichspannung doppelt vorhanden ist. Sie sind so vorhanden, daß sie bezüglich der Mittelanzapfung jeweils symmetrisch einander gegenüberliegend angeordnet sind. Auf diese Weise kann der Spartransformator STr bei der Magnetisierung sowohl in die eine als auch in die andere Richtung genutzt werden. Die Schalter SA und SB sind mit dem Spartransformator STr als Übertragereinheit UEH, wie vorhin erwähnt, in der Weise verbunden, daß der eine Schalter mit dem einen und der andere Schalter mit dem anderen Wicklungsende der Gesamtwicklung verbunden ist.

Die Gleichspannungs-Abgriffsschaltungen GAS sind entweder an den beiden Wicklungsenden oder an zwei bezüglich der Mittelanzapfung einander symmetrisch gegenüberliegenden Wicklungsanzapfungen der Gesamtwicklung des Spartransformators STr angeschlossen. Je weiter entfernt die Gleichspannungs-Abgriffsschaltungen GAS von der Mittelanzapfung an Anzapfungen der Gesamtwicklung angeschlossen sind, um so größer ist die erzeugte Ausgangsgleichspannung Ua.

Im Ausführungsbeispiel nach FIG 1 sind n Gleichspannungs-Abgriffsschaltungen GAS1 bis GASn angeschlossen. Diese erzeugen n Ausgangsgleichspannungen Ua1 bis Uan, deren Spannungswerte gemäß der vorherigen Aussagen von höheren zu niederen Werten absinken. Bei den Ausgangsgleichspannungen Ua1 bis Uan handelt es sich um positive Spannungen.

Die Gleichspannungs-Abgriffsschaltungen GAS bestehen aus zwei Dioden D und einem Kondensator C, die zur zeichnerischen Vereinfachung nur bei der ersten Gleichspannungs-Abgriffsschaltung GAS1 gekennzeichnet sind. Die Kathoden der Dioden einer Gleichspannungs-Abgriffsschaltung GAS sind zusammengeschaltet, während die Anoden jeweils mit einem der jeweils zusammengehörenden Wicklungsanzapfungen der Gesamtwicklung des Spartransformators STr verbunden sind. Die zusammengeschalteten Kathoden der Dioden D sind mit einem Anschluß des Kondensators C verbunden, an dem gleichzeitig die Ausgangsgleichspannung Ua anliegt. Wären die Dioden D umgekehrt gepolt angeordnet, läge an dem besagten Punkt des Kondensators C eine negative Ausgangsgleichspannung -Ua an. Der andere Anschluß des Kondensators C ist auf den Bezugspunkt bezogen angeschlossen.

Die in FIG 2 gezeigte Schaltungsanordnung entspricht im wesentlichen der Schaltungsanordnung gemäß FIG 1 mit den Unterschieden, daß die Dioden D der ersten Gleichspannungs-Abgriffsschaltung, die hier mit GAS1b bezeichnet ist, umgekehrt gepolt angeordnet sind und daß eine Gleichspannungs-Abgriffsschaltung GAS mit gleichlautender Bezeichnung vor den Gegentaktschaltern SA und SB vorgesehen ist. Durch die umgekehrte Polung der Dioden D der ersten Gleichspannungs-Abgriffsschaltung GAS1b erzeugt die erste Gleichspannungs-Abgriffsschaltung GAS1b eine negative erste Ausgangsgleichspannung -Ua1. Die auf der Primärseite des Spartransformators STr angeordnete Gleichspannungs-Abgriffsschaltung GAS weist nur eine Diode D auf, da kein Vorzeichenwechsel bezüglich der Eingangsspannung der Übertragereinrichtung stattfindet. Auf diese Weise kann eine Diode D eingespart werden. Gemäß der FIG 2 ist die vorhandene Diode D so gepolt angeordnet, daß die zugehörige Gleichspannungs-Abgriffsschaltung GAS eine positive erste Ausgangsgleichspannung Ua1 erzeugt.

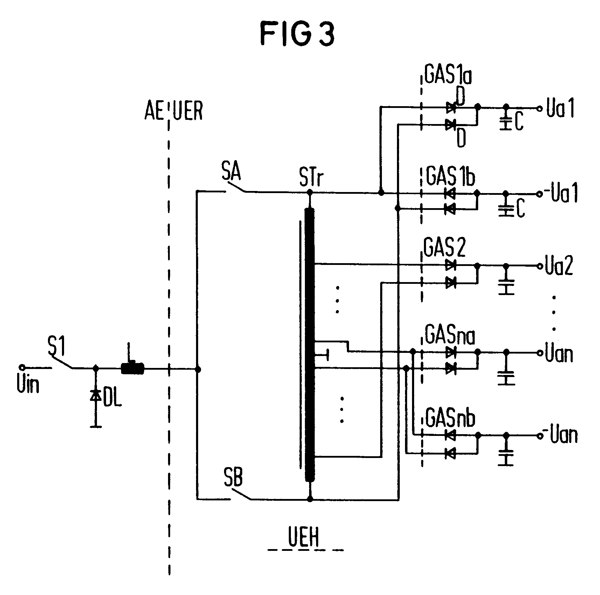

Die Schaltungsanordnung gemäß FIG 3 entspricht ebenfalls im wesentlichen der Schaltungsanordnung gemäß FIG 1 mit dem Unterschied, daß bezüglich der ersten und der n-ten Gleichspannungs-Abgriffsschaltung GAS1 und GASn, die hier mit GAS1a und GASna genauer bezeichnet sind, jeweils eine zweite Gleichspannungs-Abgriffsschaltung GAS1b bzw. GASnb parallel geschaltet ist. Die ersten Gleichspannungs-Abgriffsschaltungen GAS1a und GASna erzeugen dabei jeweils die zugehörigen positiven Ausgangsgleichspannungen Ua1 bzw. Uan, während die jeweils parallel zugeschalteten Gleichspannungs-Abgriffsschaltungen GAS1b bzw. GASnb die zugehörigen negativen Ausgangsgleichspannungen -Ua1 bzw. -Uan erzeugen. Der Vorteil dieser Schaltungsanordnung gegenüber einer Schaltungsanordnung gemäß FIG 2 besteht darin, daß sich Spannungsabfallsänderungen an den Gegentaktschaltern SA und SB für alle Ausgangsgleichspannungen Ua gleich auswirken. Spannungsabfallsänderungen an den Gegentaktschaltern SA und SB werden beispielsweise dadurch hervorgerufen, daß an den Ausgängen der Gleichspannungs-Abgriffsschaltungen Lastschwankungen auftreten, die zu einem beispielweise wenigstens kurzzeitigen Absinken vereinzelter Ausgangsgleichspannungen führen. Der Regelschalter S1 versucht dann, durch Nachregeln das Absinken der betreffenden Ausgangsgleichspannungen zu verhindern, was zu einem allgemeinen Anheben aller Ausgangsgleichspannungen führt. Weniger belastete Ausgangsgleichspannungn würden dadurch überhöht werden. Da aber die vorhin erwähnten Lastschwankungen Spannungsabfallsänderungen an den Gegentaktschaltern SA und SB nach sich ziehen, durch die die weniger belasteten Ausgänge zu gleichen Reaktionen wie die belasteten Ausgänge gezwungen werden, nämlich zu einem Absinken der jeweiligen Ausgangsgleichspannungen, bleiben die Relationen der einzelnen Ausgangsgleichspannungen untereinander stets erhalten. Anders ausgedrückt heißt das, daß der Gleichlauf zwischen den einzelnen Ausgangsgleichspannungen weitgehendst gewahrt bleibt.

## Patentansprüche

1. Stromgespeister Gegentaktwandler, bestehend aus einer auf ein Massepotential bezogenen und einen Ausgang für ein Spannungspotential aufweisenden Abwärts-Regeleinrichtung (AE) und einer mit Gegentakten gesteuerten Übertragereinrichtung (UER), die der Abwärts-Regeleinrichtung (AE) nachgeschaltet ist und als eine Übertragereinheit (UEH) einen Spartransformator (STr) mit einem Mittelabgriff und jeweiligen äußeren Anschlußpunkten aufweist, die mit jeweiligen einen Seiten von Gegentaktschaltern (SA und SB) und für eine Ausgangsgleichspannung (z.B. Ua1) mit einer Gleichspannungsabgriffschaltung (z.B. GAS1) verbunden sind,
**dadurch gekennzeichnet**,
daß jeweilige andere Seiten der Gegentaktschalter (SA, SB) jeweils mit dem das Spannungspotential führenden Ausgang der Abwärts-Regeleinrichtung (AE) verbunden sind,
daß der Mittelabgriff des Spartransformators (STr) mit dem Massepotential der Abwärts-Regeleinrichtung (AE) verbunden ist, und
daß für jeweils eine Gleichspannungsabgriffschaltung (z.B. GAS1) für eine positive bzw. negative Ausgangsgleichspannung jeweils ein erster und zweiter Anschlußpunkt am Spartransformator (STr) vorgesehen sind, die jeweils bezüglich des Mittelabgriffs des Spartransformators (STr) gleich beabstandet angeordnet sind.

2. Stromgespeister Gegentaktwandler nach Anspruch 1,
**dadurch gekennzeichnet**, daß wenigstens eine Gleichspannungs-Abgriffsschaltung (z.B. GAS) vor den Gegentaktschaltern (SA und SB) angeordnet ist.

3. Stromgespeister Gegentaktwandler nach Anspruch 1 oder 2,
**dadurch gekennzeichnet**, daß wenigstens für eine Ausgangsgleichspannung (z.B. Ua1) zwei Gleichspannungs-Abgriffsschaltungen, (z.B. GAS1a und GAS1b) vorgesehen sind, die nach den Gegentaktschaltern (SA und SB) parallel geschaltet angeordnet und derart ausgebildet sind, daß der einen Gleichspannungs-Abgriffsschaltung (z.B. GAS1a) eine Ausgangsgleichspannung mit positivem Vorzeichen (z.B. Ua1) und der anderen Gleichspannungs-Abgriffsschaltung (z.B. GAS1b) eine Ausgangsgleichspannung mit negativem Vorzeichen (z.B. -Ua1) zugeordnet ist.

## Claims

1. Current-fed push-pull converter, comprising a step-down control device (AE), which is related to earth potential and has an output for a voltage potential, and a transformer device (UER), which is controlled in a push-pull manner, is connected downstream of the step-down control device (AE) and, as a transformer unit (UEH) has an autotransformer (STr) with a centre tap and respective outer connecting points which are connected to in each case one side of push-pull switches (SA and SB) and are connected, for an output DC voltage (for example Ua1), to a DC voltage pick-off circuit (e.g. GAS1), characterized in that the other sides of the push-pull switches (SA, SB) in each case are respectively connected to that output of the step-down control device (AE) which carries the voltage potential, in that the centre tap of the autotransformer (STr) is connected to the earth potential of the step-down control device (AE), and in that in each case one first and one second connecting point are provided on the autotransformer (STr) for in each case one DC voltage pick-off circuit (for example GAS1) for a positive or negative output DC voltage respectively, which connecting points are in each case arranged at equal distances from the centre tap of the autotransformer (STr).

2. Current-fed push-pull converter according to Claim 1, characterized in that at least one DC voltage pick-off circuit (for example GAS) is arranged upstream of the push-pull switches (SA and SB).

3. Current-fed push-pull converter according to Claim 1 or 2, characterized in that two DC voltage pick-off circuits (for example GAS1a and GAS1b) are provided for at least one output DC voltage (for example Ua1), are arranged connected in parallel downstream of the push-pull switches (SA and SB) and are designed in such a manner that one DC voltage pick-off circuit (for example GAS1a) is assigned an output DC voltage with a positive mathematical sign (for example Ua1), and the other DC voltage pick-off circuit (for example GAS1b) is assigned an output DC voltage with a negative mathematical sign (for example -Ua1).

## Revendications

1. Convertisseur push-pull alimenté en courant, constitué par un dispositif de régulation régressive (AE), qui est rapporté au potentiel de masse et possède une sortie pour un potentiel de tension, et par un dispositif de transformation (UER) commandé par des cadences opposées et qui est branché en aval du dispositif de régulation régressive (AE) et possède, en tant qu'unité de transformation (UEH), un autotransformateur (STr) possédant une prise médiane et des points respectifs extérieurs de raccordement, qui sont reliés à des premiers côtés respectifs d'interrupteurs push-pull (SA et SB) et, pour une tension continue de sortie (par exemple Ua1) avec un circuit (par exemple GAS1) de prélèvement d'une tension continue,
caractérisé par le fait
que d'autres côtés respectifs des interrupteurs push-pull (SA, SB) sont reliés respectivement à la sortie du dispositif (AE) de régulation régressive (AE), qui applique le potentiel de tension.
que la prise médiane de l'autotransformateur (STr) est relié au potentiel de masse du dispositif de régulation régressive (AE), et
que pour respectivement un circuit de prélèvement de la tension continue (par exemple GAS1) pour une tension continue de sortie positive et pour une tension continue de sortie négative sont prévus, sur l'autotransformateur (STr), des premier et second points de raccordement, qui sont situés respectivement à une même distance de la prise médiane de l'autotransformateur (STr).

2. Convertisseur push-pull alimenté en courant suivant la revendication 1, caractérisé par le fait qu'au moins un circuit (par exemple GAS) de prélèvement de la tension continue est disposé en amont des interrupteurs push-pull (SA et SB).

3. Convertisseur push-pull alimenté en courant suivant la revendication 1 ou 2, caractérisé par le fait qu'au moins pour une tension continue de sortie (par exemple Ua1) sont prévus deux circuits (par exemple GAS1a et GAS1b) de prélèvement de la tension continue, qui sont branchés en parallèle avec les interrupteurs push-pull (SA et SB) et sont agencés de telle sorte qu'une tension continue de sortie possédant un signe positif (par exemple Ta1) est associé à un circuit (par exemple GAS1a) de prélèvement de la tension continue et qu'une tension continue de sortie possédant un signe négatif (par exemple -Ua1) est associée à l'autre circuit (par exemple GAS1b) de prélèvement de la tension continue.
